# EUROPÄISCHE PATENTSCHRIFT

(11) **EP 1 190 871 B1**
(45) Veröffentlichungstag und Bekanntmachung des Hinweises auf die Patenterteilung: **05.10.2005**
(21) Anmeldenummer: 01109795.3
(22) Anmeldetag: 20.04.2001
(51) Int. Cl.: B60C 11/12, B29D 30/06

(54) **Fahrzeugreifen mit Feineinschnitt in der Lauffläche, Vulkanisationsform zur Herstellung eines solchen Reifens und Lamelle zum Einsetzen in eine solche Vulkanisationsform**
Vehicle tyre with sipes in the tread, vulcanization mould for the manufacture of such a tyre and blade suitable for being introduced into such a mould
Bandage pneumatique pour véhicules muni d'incisions dans la bande de roulement, moule de vulcanisation pour la fabrication d'un tel pneu et lamelle destinée à être introduite dans un tel moule

(30) Priorität: 25.04.2000 DE 10020193
(43) Veröffentlichungstag der Anmeldung: 27.03.2002
(73) Patentinhaber: Continental Aktiengesellschaft, 30165 Hannover (DE)
(72) Erfinder: Rodewald, Helmut, 31249 Rötzum (DE)

(56) Entgegenhaltungen:
- EP-A- 0 213 452
- EP-A- 0 612 631
- DE-A- 19 651 792
- PATENT ABSTRACTS OF JAPAN vol. 014, no. 486 (M-1038), 23. Oktober 1990 (1990-10-23) -& JP 02 197402 A (OHTSU TIRE & RUBBER CO LTD:THE), 6. August 1990 (1990-08-06)
- PATENT ABSTRACTS OF JAPAN vol. 2000, no. 12, 3. Januar 2001 (2001-01-03) & JP 2000 264023 A (TOYO TIRE & RUBBER CO LTD), 26. September 2000 (2000-09-26)
- PATENT ABSTRACTS OF JAPAN vol. 1998, no. 02, 30. Januar 1998 (1998-01-30) & JP 09 272312 A (YOKOHAMA RUBBER CO LTD:THE), 21. Oktober 1997 (1997-10-21)

## Beschreibung

Die Erfindung bezieht sich auf einen Fahrzeugreifen, vorzugsweise einen Winterreifen. Dieser hat zumindest einen Einschnitt in der Lauffläche. Die Erfindung bezieht sich ferner auf eine Vulkanisationsform zur Herstellung eines solchen Fahrzeugreifens, welche aus Blech oder dergleichen hergestellte Lamellen aufweist.

Ein solcher Winterreifen ist aus der EP-A-0 213 452, welche als nächstliegender Stand der Technik angesehen wird, bekannt. Diese zeigt einen Winterreifen mit Einschnitten in der Lauffläche, wobei die Einschnitte entlang ihrer Länge eine schwankende Breite aufweisen; wobei die Längenbereiche, in denen die Einschnitte eine größere Breite aufweisen, eine größere Länge aufweisen als die Längenbereiche, in denen die Einschnitte eine kleinere Breite aufweisen; und wobei im Einschnittanfang ein Längenbereich angeordnet ist, in denen die Einschnitte eine größere Breite aufweisen.

Die **Aufgabe** der Erfindung besteht darin, an sich bekannte Einschnitte dahingehend weiter zu entwickeln, dass ihre griffigkeitssteigernde Wirkung auf sehr kaltem Schneematsch und auch auf sehr warmen Eis noch ausgeprägter wird. Während man auf kaltem Eis, zum Beispiel unter -10°C, bereits mit den bestehenden Technologien beachtliche Bremsverzögerungen ermöglicht, erscheinen die Verhältnisse in der Nähe von 0°C noch verbesserungswürdig. Hier führte die bislang vorherrschende Theorie, durch zahlreiche und lange Griffkanten, die durch die Klotzverbiegung an Einschnitträndern entstehen sollen, den - durch den Kontaktdruck am Eis entstehenden - sehr dünnen Film aufgetauten Wassers zu durchstoßen, zu keinen optimalen Erfolgen. Im Unterschied zu Skandinavien und den Alpenländern sind gerade diese Witterungsbedingungen aber in den flacheren Gegenden Mitteleuropas besonders häufig anzutreffen.

Diese Aufgabe wird durch einen Fahrzeugreifen nach Anspruch 1 und durch eine Vulkanisationsform nach Anspruch 4 gelöst.

In einem erfindungsgemäßen Reifen soll also zumindest ein Einschnitt entlang seiner Länge eine schwankende Breite aufweisen. Vorzugsweise weisen mehrere - und noch weiter bevorzugt alle - Einschnitte eine schwankende Breite auf.

Diesem Kerngedanken der Lösung liegt die Idee zugrunde, dass die Einschnitte zur Aufnahme größerer Matsch- und Wassermengen ertüchtigt werden sollen. Dabei wird unter "Matsch" im Wesentlichen ein Gemisch aus flüssigem und gefrorenem Wasser verstanden, dessen mittlere Viskosität deutlich größer ist als von vollständig getautem Wasser.

Dem liegt die Erkenntnis zugrunde, dass bei den bisherigen Konstruktionen von Quereinschnitten, die im wesentlichen dem verbesserten Aufbau von Längskräften dienen, auf nasser Straße der Effekt auftritt, dass sich die durch die Einschnitte voneinander getrennten Positive bei Übertragung von Längskräften - sei es zur Beschleunigung, sei es zum Bremsen - aneinander schmiegen, sodass die Einschnitte ihr Volumen gerade dann, wenn ihr Volumen zur Wasseraufnahme und/oder Abfuhr hilfreich sein könnte, auf nahezu Null verkleinern. Analog gilt für Längseinschnitte, die im wesentlichen dem verbesserten Aufbau von Querkräften dienen, dass auch diese Einschnitte ihr Volumen gerade dann auf nahezu Null verkleinern, wenn ihr Volumen zur Wasseraufnahme und/oder Abfuhr hilfreich sein könnte. Bei den bisherigen Konstruktionen sind es also im Wesentlichen die Längs- und Querrillen, die den Matsch das Wasser aufnehmen müssen.

Die alleinige Aufnahme in den Rillen hat neben dem Nachteil, dass sie zu großen Negativ-Anteilen zwingt, was zu erhöhtem Verschleiß des verbleibenden Positives und zu schlechterem Trocken-Reibungsbeiwert führt, den weiteren Nachteil, dass insbesondere für den zähflüssigen Matsch die Abfuhrwege von einer Klotzmitte oder Rippenmitte bis zur nächsten Rille schon ungünstig lang sind. Wenn die viel feiner verteilt vorliegenden Einschnitte zur Matsch- und Flüssigkeitsaufnahme mit herangezogen werden könnten, so die Überlegung des Erfinders, dann wären die durchschnittlichen Abfuhrwege viel kürzer. Wegen der so beschleunigten Abfuhr trägt ein größerer Teil der Aufstandsfläche zum Reibkraftaufbau bei.

Neben dem weitgehenden Volumenverlust können bisherige Einschnitte auch deshalb kaum zur Matsch- und Wasseraufnahme dienen, weil sie ihre engste Stelle gerade an der Peripherie haben. So kann kaum etwas in die Tiefe des Einschnittes einströmen.

Zwar wird das im unbelasteten Reifen zu messende Negativvolumen eines Einschnittes durch die erfindungsgemäßen Engstellen des Einschnittes noch ein wenig weiter reduziert, weshalb dieser Lösungsvorschlag zunächst absurd erscheint, aber dieser Negativvolumen-Verlust wird mehr als wettgemacht dadurch, dass die ansonsten unter Last eintretende Einschnitt-Verschließung weitgehend unterbunden ist. Nur in den relativ kurz ausgebildeten Engstellen kommt es bei einem erfindungsgemäßen Einschnitt noch zum Verschluss, während die Weitstellen kaum enger werden infolge der Blockierung durch die angrenzenden Engstellen. Wesentlich in dieser Wirkungsbilanz ist, dass die Engstellen einen wesentlich kleineren Teil der Einschnittslänge einnehmen als die Weitstellen, die hierdurch offengehalten werden.

Abgesehen von einer Verrundung an der Wurzel zur Begrenzung der Kerbwicklung ist die jeweilige Einschnittbreite in ihrer radialen Erstreckung konstant.

Zwar ist es möglich, den Übergang zwischen den verschiedenen Einschnittbreiten sehr sanft und stetig zu gestalten, jedoch hat es sich als das Beste erwiesen, nur zwei verschiedene Einschnittbreiten vorzusehen und zwischen diesen nahezu abrupt zu wechseln, wie dies Anspruch 3 lehrt. So wird der optimale Kompromiss erreichbar zwischen einem möglichst geringen Verlust an Negativfläche und einem möglichst großen Gewinn an Negativvolumen im belasteten Zustande.

Die erfindungsgemäßen Engstellen sollten nicht dort plaziert werden, wo ein Einschnitt in einem Positiv wie einer Rippe oder einem Klotz endet; vielmehr sollten solche Engstellen an den weichesten Partien plaziert sein. Demgemäß sollte ein erfindungsgemäßer Einschnitt schon in seiner einfachsten und kürzesten Ausführung über zwei Längenbereiche eine größere Breite aufweisen und über mindestens einen dazwischen liegenden Längenbereich eine verringerte Breite. Vorzugsweise wechseln sich mehrere Breit- und Engstellen entlang der Einschnittlänge ab.

Allein der neuen Theorie folgend müsste das Optimum der Bemessung bei einer sehr hohen Anzahl von Engstellen pro Einschnitt zu suchen sein, wobei die Längserstreckung einer jeden Engstelle marginal klein sein müsste. Eine solche Filigranisierung findet indessen nicht nur in wirtschaftlichen Erfordernissen eine Grenze sondern auch in dem technischen Erfordernis, den aus einer oder beiden Einschnittflanken hervortretenden Vorsprüngen, welche die erfindungsgemäßen Engstellen der Einschnitte bilden, eine genügende Biege-, Beul- und Knicksteifigkeit zu bewahren, damit sie ihrer zugedachten Funktion als Verschlussblockierer noch gerecht werden können.

In diesem Konfliktfeld lehrt der Erfinder für PKW-Winterreifen, dass die Längenbereiche, in denen der Einschnitt eine größere Breite aufweist, eine Länge zwischen 4 und 16 mm haben soll, während die Längenbereiche, in denen der Einschnitt eine kleinere Breite aufweist, nur eine Länge zwischen 10% und 80% der Länge der vorgenannten Längenbereiche aufweisen soll. Für größere Reifen wie für LKW und Busse sind die absoluten Längen-Maßangaben etwa in halber Potenz zu vergrößern [Ein ansonsten im Maßstab 1:2 vergrößerter Reifen sollte also das 1,414-fache vorgenannter Einschnittmaße aufweisen] und für kleinere Reifen, wie etwa für Motorroller, entsprechend zu verkleinern; die relative Angabe, 10% bis 80%, gilt jedoch für alle Reifen.

Die Erfindung wird nachfolgend anhand von vier Figuren näher erläutert. Es zeigt:
- Fig. 1: in perspektivischer Ansicht einen erfindungegemäßen Fahrzeugreifen,
- Fig. 2: einen einzelnen Profilklotz aus der Lauffläche des gleichen Reifens mit einem erfindungsgemäßen Einschnitt,
- Fig. 3: in einem der Übersicht dienenden Schnitt eine Vulkanisationsform mit Lamellen und
- Fig. 4: eine erfindungsgemäße Lamelle aus einer Vulkanisationsform zur Herstellung des zuvor gezeigten Einschnittes.

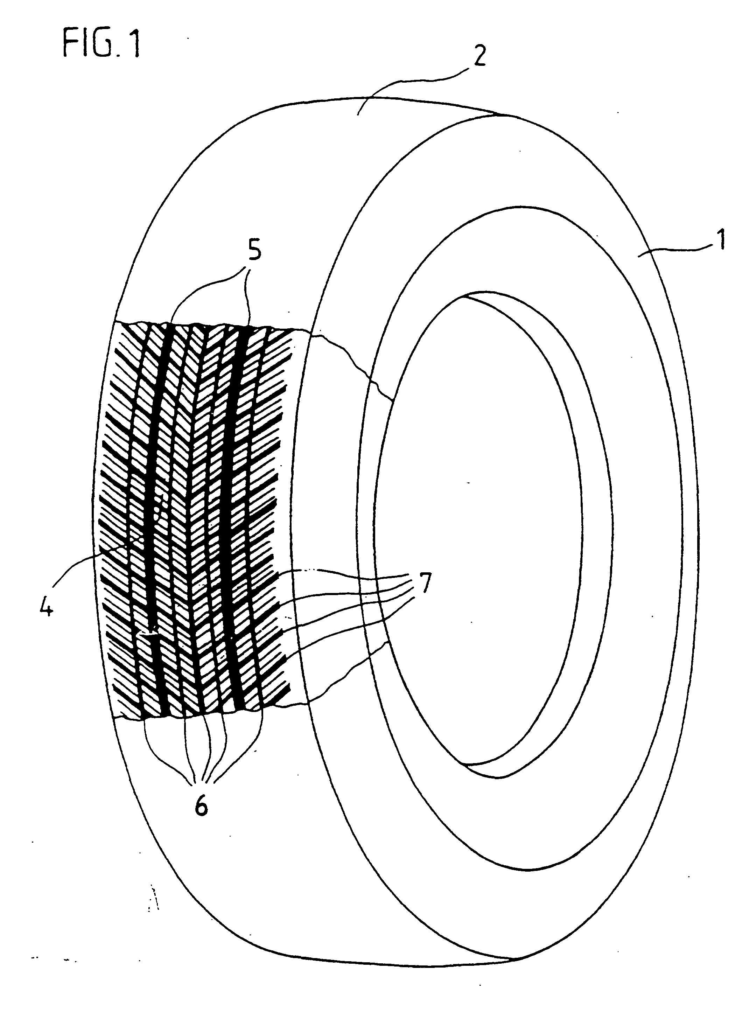

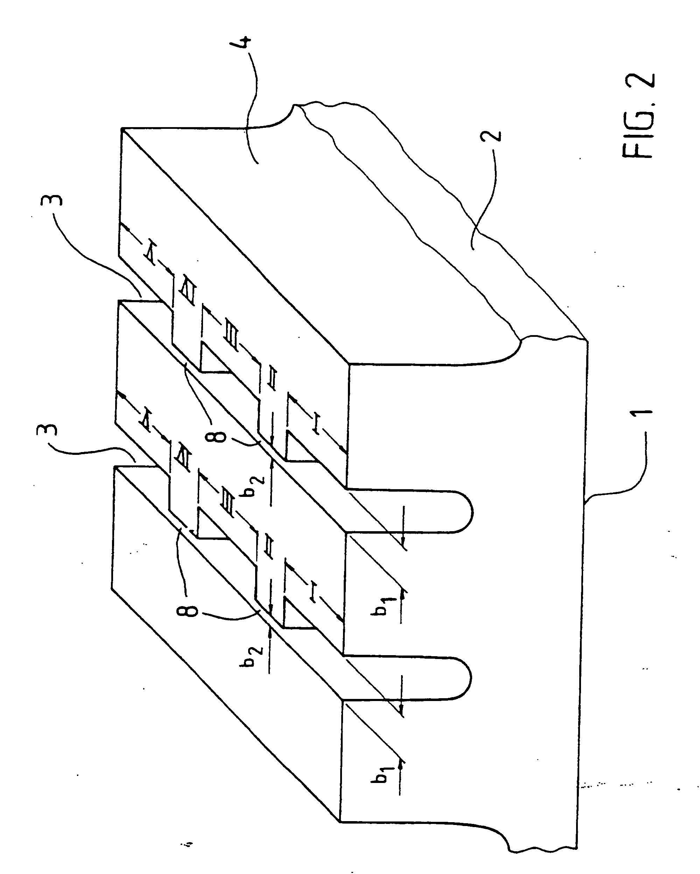

**Figur 1** zeigt in perspektivischer Ansicht einen erfindungsgemäßen Fahrzeugreifen 1 mit einer Lauffläche 2. Obwohl für die Verwirklichung der Erfindung nicht notwendig, ist die Profilierung der Lauffläche 2 in diesem Beispiele drehsinngebunden. Beispielhaft ist ein Klotz 4 herausgegriffen, welcher links von einer der beiden breiten Längsrillen 5, rechts von einer der fünf schmalen Längsrillen 6 und vorne und hinten von je einer der zahlreichen Querrillen 7 begrenzt ist. Der Klotz 4 ist durch zwei im wesentlichen axial verlaufende Einschnitte weiter untergliedert, welche hier aber mit keinem Bezugszeichen versehen sind, weil das erfindungsgemäße Détail dieser Einschnitte in dem Abbildungsmaßstabe dieser nur der Übersicht dienenden Figur 1 nicht darstellbar ist; dem ist die folgende Figur 2 gewidmet.

**Figur 2** zeigt in maßstabsgerechter perspektivischer Ansicht einen einzelnen Profilklotz 4 aus der in Figur gezeigten Lauffläche 2 des Reifens 1 mit zwei erfindungsgemäßen Einschnitten 3. Jeder dieser Einschnitte 3 weist über seinen Längenbereiche I, III und V die konstante Breite b₁ auf und über die Längenbereiche II und IV die kleinere konstante Breite b₂. Beide Einschnitte 3 sind gleichartig gestaltet.

Wenn mehrere Quereinschnitte hintereinander liegen wie hier, oder wenn mehrere Längseinschnitte nebeneinander liegen, ist es sinnvoll, dass die Engstellen 8 benachbarter Einschnitte in einer Flucht in Umfangs- bzw. Querrichtung liegen, um den angestrebten Effekt des Offenhaltens zu maximieren.

Der Profilklotz 4 ist in einem Zustande dargestellt einer noch verbliebenen Profil- und Einschnitt-Tiefe von 3 mm, der von den meisten Winterreifenherstellern und auch von uns empfohlenen Abnutzungsgrenze für Winterreifen. Selbst hierbei zeigt die erfindungsgemäße Gestaltung der Einschnitte noch Vorteile; naturgemäß aber fällt der Vorteil an einem Neureifen mit noch voller Profiltiefe - die, wie an sich bekannt, für PKW-Winterreifen etwa bei 9 mm liegen sollte - und dementsprechend einer noch größeren Tendenz der Einschnitte zum Verschluss unter Tangentiallast besonders deutlich auf.

In diesem Ausführungsbeispiel beträgt b₁ 1,0 mm und b₂ 0,3 mm. Diese Bemessung passt zu Reifen für schwere PKW und leichte Nutzfahrzeuge. Die Maße sind sinngemäß anzupassen für leichtere oder schwerere Reifen, wobei die Breite b₁ zwischen 0,5 mm und 1,2 mm liegen kann und die kleinere Breite b₂ zwischen 0,2 mm und 0,5 mm. Dabei ist es zweckmäßig, die Breite b₂ der Engstellen nur mit einem Viertel bis zu einer Hälfte der vollen Einschnittbreite zu bemessen.

Zur Einschnittwurzel hin läuft die Engstelle, so wie hier dargestellt, zweckmäßigerweise sanft aus. Bei einer Profiltiefe unterhalb von 1,5 mm tritt nämlich der mit der Erfindung bekämpfte Effekt zum einen ohnehin kaum auf und zum anderen gibt es darunter ohnehin nicht mehr allzuviel Volumen, das sich lohnen würde, offen zu halten. Durch diesen Auslauf verliert der Reifen also nicht an Qualität. Die Lamelle zur Herstellung dieses Einschnittes gewinnt aber hierdurch an Stabilität und droht nicht beim Beginn des Reifeneinformens auszubeulen.

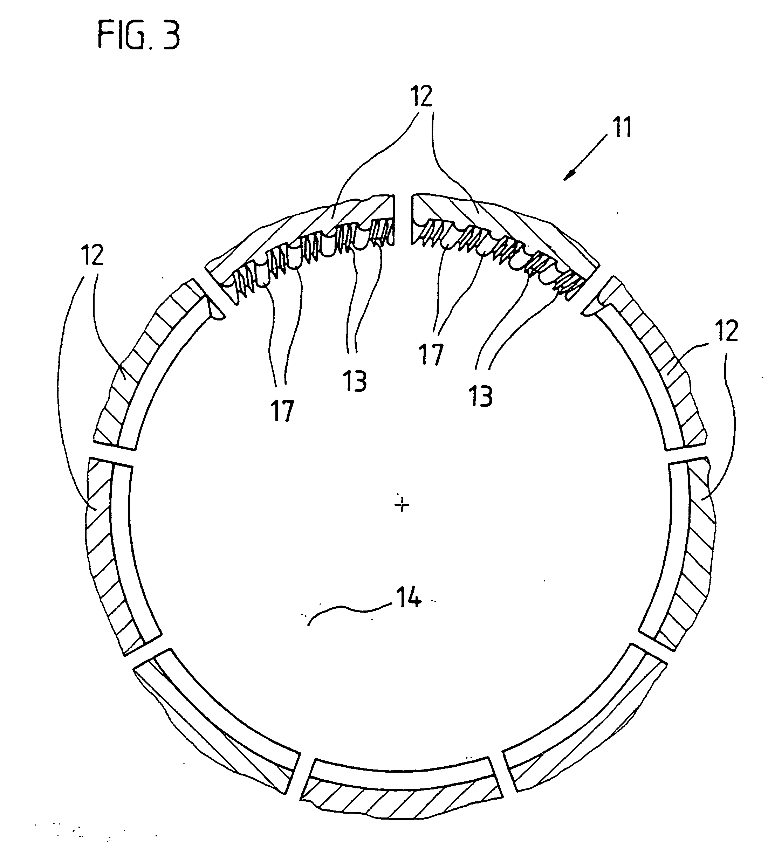

**Figur 3** zeigt in einem der Übersicht dienenden Längsschnitt eine Vulkanisationsform 11 mit Lamellen 13, deren erfindungsgemäße Détails in diesem Maßstabe allerdings nicht darstellbar sind. Diese Figur ist nicht maßstabsgerecht; vielmehr sind die Querrippen und Querlamellen übertrieben groß dargestellt, um in diesem Zeichnungsformat überhaupt auflösbar zu sein.

Wie heute in der Radialreifen-Herstellung üblich, ist diese Vulkanisationsform 11 in einen unteren und einen oberen Seitendeckel, die jeweils eine der Reifenseitenwände prägen sollen, und in eine Vielzahl radial beweglicher Segmente 12 gegliedert, welche den Laufflächenbereich prägen sollen. Beim Schließen der Form bewegen sich die radial beweglichen Segmente 12 aufeinander zu.

Nach innen in die Kaverne 14 hervorstehend sind Rippen 17 erkennbar, welche in dem mittels dieser Vorrichtung zu fertigenden Reifen 1, der in Figur 1 dargestellt war, die dort sichtbaren Querrillen 7 erzeugen sollen. Zwischen jedem Paar benachbarter Rippen 17 sind nach radial innen hervorragend je zwei Lamellen 13 angedeutet, womit ein Reifenprofil erzeugbar ist, wie es in der Figur 1 dargestellt ist. Diese Profilierung ist für alle Segmente 12 vorgesehen, der Übersicht halber ist sie jedoch nur auf zwei Segmenten dargestellt. Aus gleichem Grunde sind hier die in Umfangsrichtung verlaufenden Rippen, die die für die Erfindung unwesentlichen Längsrillen im Reifen erzeugen, nicht dargestellt.

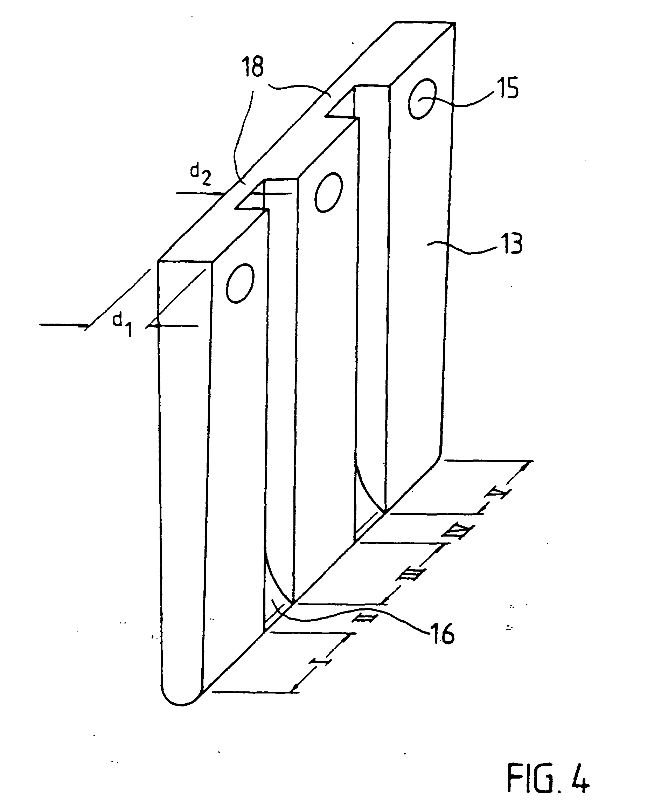

**Figur 4** zeigt in weit größerem Maßstabe, nämlich im gleichen Maßstabe wie Figur 2, eine erfindungsgemäße Lamelle 13 aus der in Figur 3 gezeigten Vulkanisationsform 11. Solche Lamellen 13 dienen der Herstellung je eines der in der Figur 2 gezeigten Einschnitte. Zur Erzeugung der Engstellen der Einschnitte weist die Lamelle 13 an den entsprechenden Stellen je eine - vorzugsweise durch Prägen erzeugte - Dünnstelle 18 auf. Damit hat dieser Lamelle einer Vulkanisationsform zur Herstellung eines Fahrzeugreifens entlang ihrer Länge eine schwankende Dicke und zwar d₁ in den dickeren Bereichen I, III und V und d₂ in den dünneren Bereichen II und IV.

Bekanntlich sind Lamellen häufig zickzackförmig gewellt, was nicht nur Vorteile für den damit gefertigten Reifen bringt, sondern auch den Beulwiderstand der Lamelle erhöht. Für die Stabilität der Lamelle gegen Umknicken beim Einformen hat es sich bei den erfindungsgemäßen Lamellen als besonders vorteilhaft herausgestellt, wenn die Dünnstellen der Lamellen gerade in die Knicke gelegt werden. Diese vorteilhafte Weiterbildung ist hier allerdings nicht dargestellt, weil sie das Erkennen der für die Erfindung entscheidenden Anordnung von Engstellen im Einschnitt bzw. von Dünnstellen in der Lamelle erschweren würde.

Die gezeigte Lamelle 13 hat im Wesentlichen die Dicke d₁ = 1 mm, an den Dünnstellen 18 hingegen, die die Engstellen 8 des Einschnittes 3 erzeugen sollen, die kleinere Dicke d₂ = 0,3 mm. Die Dünnstellen 18 laufen zweckmäßigerweise an dem Ende, das nach Einbau in die Vulkanisationsform nach radial innen weisen soll, auf die volle Lamellendicke d₁ in einem Auslauf 16 aus. In an sich bekannter Weise befinden sich in der Wurzel der Lamelle 13 Befestigungslöcher 15; wie gezeigt sind sie zweckmäßigerweise so angeordnet, dass sie keine der Engstellen 18 durchsetzen.

Zusammengefasst lehrt die Erfindung einen Reifen für insbesondere winterliche Straßen und eine Vorrichtung zu dessen Herstellung. Der Reifen soll solche Einschnitte aufweisen, die Engstellen haben zur Verhinderung eines Einschnittverschlusses bei Übertragung von tangentialen Kräften.

Die folgende Bezugszeichenliste ist Bestandteil der Beschreibung.

### Bezugszeichenliste:

- 1: Fahrzeugreifen
- 2: Lauffläche von 1
- 3: Einschnitt in 4 von 2; auch kurz "Einschnitt" genannt
- 4: Klotz von 2
- 5: breite Längsrillen
- 6: schmale Längsrillen
- 7: Querrillen
- 8: Engstelle in 3
- 11: radial geteilte Vulkanisationsform
- 12: radial bewegliche Segmente von 11
- 13: Lamelle aus 11 zur Herstellung von 3 in 1
- 14: Kaverne von 11
- 15: Befestigungslöcher in Wurzel von 13
- 16: Auslauf von Dünnstellen 18 einer Lamelle 13
= Übergang von d₁ auf d₂ beim Gehen von der radial innersten Kante von 13 nach radial außen
- 17: Rippe in 11 zur Herstellung von 7 in 1
- 18: Dünnstelle von 13 zur Herstellung von 8 in 3

- b₁: größere Breite von 3
- b₂: kleinere Breite von 3

- d₁: größere Dicke von 13
- d₂: kleinere Dicke von 13

- I: ganz linker Bereich von 3
- II: rechts an I anschließender Bereich von 3
- III: rechts an II anschließender Bereich von 3
- IV: rechts an III anschließender Bereich von 3
- V: rechts an IV anschließender Bereich von 3

## Patentansprüche

1. **Fahrzeugreifen (1),** vorzugsweise Winterreifen, mit zumindest einem Einschnitt (3) in der Lauffläche (2),
- wobei der Einschnitt (3) entlang seiner Länge eine schwankende Breite (b₁, b₂) aufweist,
- wobei die Längenbereiche (I, III, V), in denen der Einschnitt (3) eine größere Breite (b₁) aufweist, eine Länge zwischen 4 und 16 mm haben, - während die Längenbereiche (II, IV), in denen der Einschnitt (3) eine kleinere Breite (b₂) aufweist, nur eine Länge zwischen 10% und 80% der Länge der vorgenannten Längenbereiche (I, III, V) aufweisen,
- - wobei die jeweilige Einschnittbreite über ihre radiale Erstreckung im wesentlichen konstant ist, und
- wobei im Einschnittanfang und am Einschnittende ein Längenbereich (I, V) angeordnet ist, in denen der Einschnitt (3) eine größere Breite (b1) aufweist.

2. Fahrzeugreifen (1) nach Anspruch 1, **dadurch gekennzeichnet, dass** der Einschnitt (3) über zumindest zwei Längenbereiche (I, III, V) eine größere Breite (b₁) aufweist und über mindestens einen dazwischen liegenden Längenbereich (II, IV) eine verringerte Breite (b₂) aufweist.

3. Fahrzeugreifen (1) nach Anspruch 2, **dadurch gekennzeichnet, dass** der Einschnitt (3) innerhalb der einen Längenbereiche (I, III, V) eine im wesentlichen konstante erste Breite (b₁) aufweist und genauso innerhalb der anderen Längenbereiche (II, IV) eine im wesentlichen konstante zweite Breite (b₂).

4. **Vulkanisationsform (11)** zur Herstellung eines Fahrzeugreifens (1) nach Anspruch 1, wobei die Vulkanisationsform aus Blech oder dergleichen hergestellte Lamellen (13) aufweist,
- wobei zumindest einige der Lamellen (13) entlang ihrer Länge eine schwankende Dicke (d₁, d₂) aufweisen,
- wobei die Längenbereiche (I, III; V), in denen die Lamellen (13) eine größere Dicke (d₁) aufweisen, eine Länge zwischen 4 und 16 mm haben, während die Längenbereiche (II, IV), in denen die Lamellen (13) eine kleinere Dicke (d₂) aufweisen, nur eine Länge zwischen 10% und 80% der Länge der vorgenannten Längenbereiche (I, III, V) aufweisen,
- wobei die jeweilige Lamellendicke über ihre radiale Erstreckung im wesentlichen konstant ist, und
- - wobei am Lamellenanfang und am Lamellenende ein Längenbereich (I, V) angeordnet ist, in denen die Lamelle (13) eine größere Dicke (d1) aufweist.

5. Vulkanisationsform (11) nach Anspruch 4, **dadurch gekennzeichnet, dass** zumindest einige ihrer Lamellen (13) über zumindest jeweils zwei Längenbereiche (I, III, V) eine größere Dicke (d₁) aufweisen und über mindestens jeweils einen dazwischen liegenden Längenbereich (II, IV) eine verringerte Dicke (d₂) aufweisen.

6. Vulkanisationsform (11) nach Anspruch 5, **dadurch gekennzeichnet, dass** zumindest einige ihrer Lamellen (13) innerhalb der einen Längenbereiche (I, III, V) einer im wesentlichen konstante erste Dicke (d₁) aufweisen und genauso innerhalb der anderen Längenbereiche (II, IV) eine im wesentlichen konstante zweite Dicke (d₂).

## Claims

1. Vehicle tyre (1), preferably a winter tyre, with at least one sipe (3) in the tread (2),
- the sipe (3) having a varying width (b₁, b₂) along its length,
- the linear regions (I, III, V) in which the sipe (3) has a greater width (b₁) having a length of between 4 and 16 mm, while the linear regions (II, IV) in which the sipe (3) has a smaller width (b₂) only having a length of between 10% and 80% of the length of the aforementioned linear regions (I, III, V),
- the respective width of the sipes being substantially constant over their radial extent, and
- at the beginning of the sipe and at the end of the sipe there being arranged a linear region (I, V) in which the sipe (3) has a greater width (b₁).

2. Vehicle tyre (1) according to Claim 1, **characterized in that** the sipe (3) has a greater width (b₁) over at least two linear regions (I, III, V) and has a reduced width (b₂) over at least one linear region (II, IV) lying in between.

3. Vehicle tyre (1) according to Claim 2, **characterized in that** the sipe (3) has within the one linear regions (I, III, V) a substantially constant first width (b₁) and equally has within the other linear regions (II, IV) a substantially constant second width (b₂).

4. Vulcanization mould (11) for producing a vehicle tyre (1) according to Claim 1, the vulcanization mould having lamellae (13) produced from metal sheet or the like,
- at least some of the lamellae (13) having a varying thickness (d₁, d₂) along their length,
- the linear regions (I, III; V) in which the lamellae (13) have a greater thickness (d₁) having a length of between 4 and 16 mm, while the linear regions (II, IV) in which the lamellae (13) have a smaller thickness (d₂) only having a length of between 10% and 80% of the length of the aforementioned linear regions (I, III, V),
- the respective lamella thickness being substantially constant over its radial extent, and
- at the beginning of the lamella and at the end of the lamella there being arranged a linear region (I, V) in which the lamella (13) has a greater thickness (d₁).

5. Vulcanization mould (11) according to Claim 4, **characterized in that** at least some of its lamellae (13) have a greater thickness (d₁) over at least two linear regions (I, III, V) in each case and have a reduced thickness (d₂) over at least one linear region (II, IV) lying in between in each case.

6. Vulcanization mould (11) according to Claim 5, **characterized in that** at least some of its lamellae (13) have a substantially constant first thickness (d₁) within the one linear regions (I, III, V) and equally have a substantially constant second thickness (d₂) within the other linear regions (II, IV).

## Revendications

1. Pneu (1) de véhicule, de préférence pneu neige, dont la surface de roulement (2) présente au moins une incision (3), dans lequel :
- la largeur (b₁, b₂) de l'incision (3) varie le long de celle-ci,
- les zones longitudinales (I, III, V) dans lesquelles l'incision (3) présente une grande largeur (b₁) ont une longueur comprise entre 4 et 16 mm tandis que les zones longitudinales (II, IV) dans lesquelles l'incision (3) présente une petite largeur (b₂) ont une longueur comprise entre 10 % et 80 % de la longueur desdites zones longitudinales (I, III, V), la largeur de chacune des incisions étant essentiellement constante le long de leur extension radiale et
- l'incision (3) commence et finit par une zone longitudinale (I, V) de grande largeur (b₁).

2. Pneu (1) de véhicule selon la revendication 1, **caractérisé en ce que** l'incision (3) a une grande largeur (b₁) sur au moins deux zones longitudinales (I, III, V) et une largeur limitée (b₂) sur au moins une zone longitudinale (II, IV) intermédiaire.

3. Pneu (1) de véhicule selon la revendication 2, **caractérisé en ce que** certaines zones longitudinales (I, III, V) de l'incision (3) ont une première largeur (b₁) essentiellement constante et, de la même manière, les autres zones longitudinales (II, IV) ont une deuxième largeur (b₂) essentiellement constante.

4. Moule de vulcanisation (11) pour fabriquer un pneu (1) de véhicule selon la revendication 1, qui présente des lamelles (13) en tôle ou similaire et dans lequel :
- au moins certaines lamelles (13) ont une épaisseur (d₁, d₂) qui varie le long de leur longueur,
- la longueur des zones longitudinales (I, III, V) dans lesquelles les lamelles (13) ont une grande épaisseur (d₁) est comprise entre 4 et 16 mm tandis que la longueur des zones longitudinales (II, IV) dans lesquelles les lamelles (13) ont une petite épaisseur (d₂) est comprise entre 10 % et 80 % de la longueur desdites zones longitudinales (I, III, V), l'épaisseur de chacune des lamelles étant essentiellement constante le long de leur extension radiale et
- chaque lamelle (13) commence et finit par une zone longitudinale (I, V) de grande épaisseur (d₁).

5. Moule de vulcanisation (11) selon la revendication 4, **caractérisé en ce qu'**au moins certaines de ses lamelles (13) ont chacune une grande épaisseur (d₁) sur au moins deux zones longitudinales (I, III, V) et une épaisseur réduite (d₂) sur au moins une zone longitudinale (II, IV) intermédiaire.

6. Moule de vulcanisation (11) selon la revendication 5, **caractérisé en ce qu'**au moins certaines de ses lamelles (13) ont une première épaisseur (d₁) essentiellement constante dans certaines des zones longitudinales (I, III, V) et, de la même manière, ont une deuxième épaisseur (d₂) essentiellement constante dans les autres zones longitudinales (II, IV).
